(19) Europäisches Patentamt
European Patent Office
Office européen des brevets

(11) **EP 3 318 314 A1**

(12) **EUROPÄISCHE PATENTANMELDUNG**

(43) Veröffentlichungstag:
**09.05.2018 Patentblatt 2018/19**

(51) Int Cl.:
***B01D 53/14*** *(2006.01)*

(21) Anmeldenummer: **16020494.7**

(22) Anmeldetag: **13.12.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **04.11.2016 DE 102016013091**

(71) Anmelder: **Linde Aktiengesellschaft
80331 München (DE)**

(72) Erfinder:
• **Tran, Anh Tuan
86161 Augsburg (DE)**

• **Riesch, Peter
83646 Bad Tölz (DE)**
• **Kerestecioglu, Ulvi
82269 Geltendorf (DE)**
• **Golubev, Dimitri
82538 Geretsried (DE)**

(74) Vertreter: **Imhof, Dietmar
Linde AG
Technology & Innovation
Corporate Intellectual Property
Dr.-Carl-von-Linde-Straße 6-14
82049 Pullach (DE)**

(54) **VERFAHREN UND ANLAGE ZUM REINIGEN EINES GASES**

(57) Die Erfindung betrifft ein Verfahren zum Reinigen eines Gases, bei dem mittels einer Luftzerlegungsanlage (100) Stickstoffstoff (d) bereitgestellt wird, der einer Gas-Wäsche-Einheit zugeführt wird, in welcher mittels eines Waschmediums unerwünschte Komponenten aus dem Gas ausgewaschen werden, wobei die unerwünschten Komponenten aus dem Waschmedium wenigstens teilweise unter Verwendung des zugeführten Stickstoffs (d) als Strippgas in einer Strippeinheit der Gas-Wäsche-Einheit ausgetrieben werden, wobei der Stickstoff (d) von der Luftzerlegungsanlage (100) mit einer Temperatur unter Umgebungstemperatur bereitgestellt wird, sowie eine Anlage zum Reinigen eines Gases.

**Fig. 1**

EP 3 318 314 A1

**Beschreibung**

Die Erfindung betrifft ein Verfahren sowie eine Anlage zum Reinigen eines Gases gemäß den Oberbegriffen der unabhängigen Patentansprüche.

Stand der Technik

Für verschiedenste Anwendungen werden reine bis hochreine Gase benötigt. Hierzu kann das Gas mittels entsprechender Anlagen gereinigt bzw. gewaschen werden. Ein Beispiel hierfür ist das sog. Rectisol-Verfahren, bei dem bei einer Rectisol-Wäsche bzw. in einer Rectisol-Wäsche-Einheit (engl. "Rectisol Washing Unit" bzw. RWU) mit einem organischen Waschmittel, beispielsweise mittels Methanol als Waschmedium, unerwünschte Komponenten aus einem Gas ausgewaschen werden. Im Beispiel des Rectisol -Verfahrens handelt es sich bei den auszuwaschenden Komponenten in der Regel um Sauergase wie Schwefelwasserstoff ($H_2S$) und Kohlenstoffdioxid ($CO_2$), ggf. auch Blausäure bzw. Cyanwasserstoff (HCN) und/oder Carbonylsulfid (COS).

Nachfolgend wird unter einem "Gas" ein Reingas oder Gasgemisch verstanden, beispielsweise Synthesegas, also eine Mischung aus (zumindest überwiegend) Kohlenmonoxid, Wasserstoff und ggf. Kohlendioxid. Ist nachfolgend von "Stickstoff" die Rede, kann es sich um Reinstickstoff aber auch um ein stickstoffreiches Gasgemisch mit beispielsweise mehr als 80, 90, 95 oder 99 mol-% Stickstoff handeln.

Innerhalb der Rectisol-Wäsche (oder auch einer anderen Gas-Wäsche-Einheit) kann nun in einer Strippkolonne weiterhin Stickstoff ($N_2$) als Strippgas verwendet werden, um die nun in dem Waschmedium (Methanol) gelösten Komponenten wieder auszutreiben. Hierzu wird Stickstoff in der Regel mit Umgebungstemperatur an die Anlagengrenze der Rectisol-Wäsche geliefert und dieser zugeführt. Der Druck des Stickstoffs an der Anlagengrenze sollte dabei ausreichen, um den Stickstoff in die dortige Strippeinheit bzw. Strippkolonne fördern zu können. Da im Normalbetrieb der Rectisol-Wäsche die Stickstoffmenge bereits über einen Turbinen-Leitapparat reguliert wird, entfällt ein Mengenregelventil.

Es sollte für den Stillstand lediglich eine Klappe als dichtes Absperrorgan vorhanden sein, welche im Normalbetrieb voll geöffnet ist und damit nahezu keinen Druckverlust verursacht. Die Strippkolonne kann dann bei ungefähr 2 bis 2,5 bar betrieben werden und es ist ein Druck für den Stickstoff an der Anlagengrenze von 2,1 bis 2,6 bar ausreichend. Je nach Druckverlusten auf dem Weg von der Anlagengrenze zur Stippeinheit kann der benötigte Druck jedoch auch höher sein. Eine separate Druckerhöhung wird dabei jedoch nicht benötigt. Es sei angemerkt, dass es sich bei den hier und im Folgenden verwendeten Druckangaben um absolute Drücke handelt. Sollte der Stickstoff jedoch vor dem Einleiten in die Rectisol-Wäsche auch für eine Adsorptionsanlage zur Gasreinigung verwendet werden dann kann ein entsprechend höherer Anlagengrenzdruck von ca. 2,6 bar bis 3,6 bar nötig sein. Denkbar sind jedoch auch geringere oder höhere Drücke.

Eine Bereitstellung des Stickstoffs kann nun beispielsweise mittels einer Luftzerlegungsanlage (engl. "Air Separation Unit", ASU) erfolgen. Die Herstellung von Luftprodukten in flüssigem oder gasförmigem Zustand durch Tieftemperaturzerlegung von Luft in Luftzerlegungsanlagen ist bekannt und in der Fachliteratur, beispielsweise bei H.-W. Häring (Hrsg.), Industrial Gases Processing, Wiley-VCH, 2006, insbesondere in Abschnitt 2.2.5, "Cryogenic Rectification", beschrieben.

Luftzerlegungsanlagen weisen Destillationssäulensysteme auf, die beispielsweise Zwei- oder Dreisäulenanordnungen zur Bereitstellung von Stickstoff- und sauerstoffreichen Luftprodukten umfassen. Typischerweise sind dabei zumindest eine sogenannte (Hoch-)Drucksäule und eine sogenannte Niederdrucksäule vorhanden. Der Betriebsdruck der Hochdrucksäule beträgt in der Regel 4,9 bis 6,9 bar, beispielsweise etwa 5,3 bar. Die Niederdrucksäule wird bei einem Betriebsdruck von in der Regel 1,3 bis 1,7 bar, beispielweise etwa 1,4 bar, betrieben. Die genannten Druckwerte liegen im Sumpf entsprechender Säulen vor. Beide Rektifikationskolonnen können auch zweiteilig ausgebildet sein Zu Details sei auf die Fachliteratur verwiesen.

Der klassische Luftzerlegungsprozess mit dem Doppelsäulen-Verfahren erlaubt die Entnahme einer bestimmten Menge an Stickstoff am Kopf der Hochdrucksäule. Dieser Stickstoff-Strom kann nach Erwärmung in einem Wärmetauscher entweder direkt mit seinem Druck von beispielsweise ca. 5 bar gewonnen oder weiterverdichtet werden. Ein für das erwähnte Rectisol-Verfahren notwendiger Stickstoff wird dabei in der Regel mit dem Druck der Hochdrucksäule und bei in etwa Umgebungstemperatur zur Rectisol-Wäsche geliefert.

Die vorliegende Erfindung stellt sich die Aufgabe, eine verbesserte und insbesondere energieeffizientere Möglichkeit zum Reinigen von Gas bereitzustellen.

Offenbarung der Erfindung

Diese Aufgabe wird durch ein Verfahren und eine Anlage zum Reinigen von Gas mit den Merkmalen der unabhängigen Patentansprüche gelöst. Ausgestaltungen sind Gegenstand der abhängigen Patentansprüche sowie der nachfolgenden Beschreibung.

Vorteile der Erfindung

Die vorliegende Erfindung geht von einem an sich bekannten Verfahren zur Reinigung von Gas bzw. einer Anlage zur Reinigung von Gas aus, wie dies eingangs anhand des Rectisol-Verfahrens näher erläutert wurde, wobei der benötigte Stickstoff mittels einer Luftzerlegungsanlage bereitgestellt wird. Auch wenn hier und im Folgenden insbesondere auf das Rectisol-Verfahren bzw. eine Rectisol-Wäsche mit Methanol als Waschmedium Bezug genommen wird, so kann die Erfindung auch bei anderen Verfahren bzw. Anlagen zur Reinigung von Gas Anwendung finden, bei denen mittels Stickstoff als Strippgas Komponenten aus dem Waschmedium ausgetrieben werden.

Bei den unerwünschten Komponenten, die mittels des Waschmediums, also beispielsweise Methanol, aus dem Gas ausgewaschen werden, kann es sich im Falle des Rectisol-Verfahrens insbesondere um Sauergase wie Schwefelwasserstoff ($H_2S$) und Kohlenstoffdioxid ($CO_2$), aber auch Blausäure bzw. Cyanwasserstoff (HCN) und/oder Carbonylsulfid (COS) handeln, sodass das Gas anschließend beispielsweise als Synthesegas verwendet werden kann. Anschließend werden diese unerwünschten Komponenten, zumindest teilweise, wieder aus dem Stickstoff ausgetrieben, um den Stickstoff weiter verwenden oder auch an die Atmosphäre abgeben zu können. Auf die an sich bekannte Funktionsweise einer Rectisol-Wäsche bzw. das Rectisol-Verfahren soll an dieser Stelle im Übrigen nicht näher eingegangen werden.

Erfindungsgemäß wird der Stickstoff von der Luftzerlegungsanlage nun nicht mit Umgebungstemperatur sondern mit einer geringeren als Umgebungstemperatur bereitgestellt. Der Temperaturbereich, in welchem der Stickstoff bereitgestellt wird, kann dabei bei 0 bis -100 °C, insbesondere bei -10 bis -90 °C, beispielsweise bei -20 bis -80 °, liegen. Besonders bevorzugt sind Temperaturen bis -45 oder -50°C. Auf diese Weise erhöht sich der Kältebedarf der Luftzerlegungsanlage und das Einblaseäquivalent kann besser ausgenutzt werden. Der Stickstoff kann hierzu teilweise an einem üblicherweise vorhandenen Wärmetauscher vorbei direkt zur Entnahme geführt werden oder vollständig an einer passenden Stelle im Wärmetauscher entnommen werden. Die Vorteile eines derartigen Verfahrens werden im Folgenden hergeleitet. Die jeweils erläuterten Maßnahmen können dabei jeweils auch in einem erfindungsgemäßen Verfahren bzw. einer entsprechenden erfindungsgemäßen Luftzerlegungsanlage vorgesehen sein.

Insbesondere kann die Verringerung des Energieverbrauchs in einer Luftzerlegungsanlage mit einer Doppelsäule dadurch erfolgen, dass abgekühlte Druckluft in die Niederdrucksäule eingespeist oder Druckstickstoff aus der Hochdrucksäule entspannt wird. Die Menge dieser Luft beeinflusst die Trennung in der Niederdrucksäule, senkt jedoch den Energieverbrauch.

In vergleichbarer Weise trifft dies auch für sämtlichen Stickstoff zu, der der Hochdrucksäule entnommen und weder kondensiert und als Rücklauf in diese zurückgeführt noch kondensiert und als flüssiger Rücklauf auf die Niederdrucksäule verwendet wird, weil dieser dort nicht mehr als Rücklauf zur Verfügung steht. Solcher Stickstoff ist Stickstoff aus der Hochdrucksäule, der der Luftzerlegungsanlage in Form eines flüssigen oder gasförmigen Stickstoffprodukts entnommen wird, und der Stickstoff aus der Hochdrucksäule, der in einer sogenannten Druckstickstoff-Turbine (PGAN-Turbine) zur Kälteproduktion entspannt und anschließend anderweitig genutzt wird. Hierunter fällt auch innenverdichteter Stickstoff, also flüssiger Stickstoff, der der Hochdrucksäule entnommen, in einer Pumpe auf Druck gebracht und im Hauptwärmetauscher verdampft wird.

Zur Vereinfachung wird hier der Begriff des "Einblaseäquivalents" verwendet. Das Einblaseäquivalent sei dabei definiert als die Summe der Menge des Stickstoffs, der der Hochdrucksäule entnommen und weder als Rücklauf in diese zurückgeführt noch als flüssiger Rücklauf auf die Niederdrucksäule verwendet wird, und der Menge der in die Niederdrucksäule entspannten Druckluft im Verhältnis zu der gesamten in das Destillationssäulensystem eingespeisten Druckluft. Wird beispielsweise eine Druckstickstoff-Turbine eingesetzt und in dieser eine Menge M1 des Stickstoffs vom Kopf der Hochdrucksäule entspannt, eine Menge M2 des Stickstoffs, der der Hochdrucksäule entnommen wird, als flüssiges und/oder gasförmiges Stickstoffprodukt der Luftzerlegungsanlage entnommen, und eine Menge M3 an Druckluft dem Destillationssäulensystem zugeführt, ergibt sich das Einblaseäquivalent E zu

$$E = (M1 + M2) / M3 \qquad (1)$$

Wie erwähnt, kann der Stickstoff für eine Rectisolwäsche mit ca. 5 bar aus der Hochdrucksäule entnommen werden. Dieser Stickstoff trägt damit zum Einblaseäquivalent bei. Je höher das Einblaseäquivalent ist, desto höher ist die Energieeinsparung in einer Luftzerlegungsanlage.

Das Einblaseäquivalent ist herkömmlicherweise nach oben begrenzt, weil bei erhöhtem Einblaseäquivalent die Sauerstoffausbeute und/oder Sauerstoffreinheit von Sauerstoff, der der Niederdrucksäule entnommen wird, verringert wird. Dies ist auf die spezifischen Verhältnisse in einer Doppelsäule zurückzuführen, in denen sich die Trennbedingungen in der Niederdrucksäule nicht vollständig von jenen in der Hochdrucksäule entkoppeln lassen. Dem kann jedoch durch eine Argonausschleusung aus der Niederdrucksäule begegnet werden.

Unter einer "Argonausschleusung" wird dabei hier allgemein eine Maßnahme verstanden, bei der aus der Niederdrucksäule ein Fluid abgezogen wird, das gegenüber einer aus der Niederdrucksäule ausgespeisten sauerstoffreichen Flüssigkeit, insbesondere dem Sumpfprodukt der Niederdrucksäule, an Argon angereichert ist, d.h. beispielsweise mindestens den doppelten, fünffachen oder zehnfachen Argongehalt aufweist. Eine Argonausschleusung umfasst ferner, zumindest einen Teil des in einem entsprechenden, abgezogenen Fluid enthaltenen Argons nicht mehr in die Niederdrucksäule zurückzuführen. Das Fluid wird insbesondere einer Argonabreicherung unterworfen und erst anschließend wieder in die Niederdrucksäule zurückgeführt. Wie auch nachfolgend erläutert, sind klassische Arten einer Argonausschleusung eine Überführung eines entsprechenden Fluids in eine Rohargonsäule oder Argonausschleussäule, von der lediglich ein argonarmes, sauerstoffreiches Fluid wieder in die Niederdrucksäule zurückgeführt wird.

Der vorteilhafte Effekt der Argonausschleusung ist darauf zurückzuführen, dass die Sauerstoff-Argon-Trennung für die ausgeschleuste Argonmenge in der Niederdrucksäule nicht mehr erforderlich ist. Das Abtrennen des Argons vom Sauerstoff in der Niederdrucksäule selbst ist grundsätzlich aufwendig und verlangt nach einer entsprechenden "Heiz"-Leistung des Hauptkondensators. Wird Argon ausgeschleust und unterbleibt damit die Sauerstoff-Argon-Trennung oder wird diese beispielsweise in eine Rohargonsäule oder Argonausschleussäule verlagert, muss die entsprechende Argonmenge nicht mehr im Sauerstoffabschnitt der Niederdrucksäule abgetrennt werden und die Heizleistung des Hauptkondensators kann reduziert werden. Daher kann, bei gleichbleibender Ausbeute an Sauerstoff, entweder mehr Luft in die Niederdrucksäule eingeblasen oder mehr Druckstickstoff aus der Hochdrucksäule entnommen werden, was wiederum energetische Vorteile bietet.

Wenn in einem entsprechenden Verfahren ein gasförmiges Stickstoffprodukt nur aus der Hochdrucksäule und nicht (als gasförmiger Niederdruckstickstoff, LPGAN) aus der Niederdrucksäule entnommen, bzw. wird nur eine vergleichsweise geringe Menge Argon als Produkt gewonnen, empfiehlt es sich ferner, einen stickstoffreichen flüssigen Rücklauf aus der Hochdrucksäule nicht direkt aus dem Hauptkondensator, sondern einige Böden tiefer (in Form eines "unreinen" flüssigen stickstoffreichen Stroms, sogenanntem "Waschstickstoff", WLIN) abzuziehen und diesen damit bezüglich seines Sauerstoffgehalts mit einem unreinen Stickstoffstrom vom Kopf der Niederdrucksäule ins Gleichgewicht zu bringen.

Auf diese Weise geht Sauerstoff verloren (in dem "unreinen" flüssigen stickstoffreichen Strom sind typischerweise ca. 0,1 bis 2 oder 3% Sauerstoff enthalten). Dadurch aber, dass auch relativ viel Argon in diesen Strom übergeht (der Argongehalt liegt bei ca. 0,1 bis 1%; das Verhältnis zum ebenfalls enthaltenen Sauerstoff ist also deutlich höher als in Luft), kann aus den erläuterten Gründen hierdurch ebenfalls Energie eingespart werden. Auch dieses Argon muss, mit anderen Worten, nicht in der Niederdrucksäule von Sauerstoff abgetrennt werden. Es geht überwiegend in das vom Kopf der Niederdrucksäule abgezogene Ausschussgas (Waste Gas) über.

Die Argonausschleusung über eine Rohargonsäule zur Gewinnung eines Argonprodukts ist beispielsweise bei Häring in Abschnitt 2.2.5.6, "Apparatus", beschrieben. Anstelle einer Kombination einer Roh- und einer Reinargonsäule kann ein Argonprodukt bei entsprechender Ausgestaltung auch direkt der Rohargonsäule entnommen werden. Eine Argonausschleussäule dient hingegen vornehmlich zur Argonausschleusung zu dem oben erläuterten Zweck. Insbesondere kann als Argonausschleussäule eine Destillationssäule mit weniger als 40 theoretischen Böden verwendet werden, die daher einfach und kostengünstig erstellt werden kann.

Grundsätzlich kann unter einer "Argonausschleussäule" eine Trennsäule zur Argon-Sauerstoff-Trennung verstanden werden, die nicht zur Gewinnung eines reinen Argonprodukts, sondern zur Ausschleusung von Argon der in Hochdrucksäule und Niederdrucksäule zu zerlegenden Luft dient. Ihre Schaltung unterscheidet sich nur wenig von der einer klassischen Rohargonsäule, allerdings enthält sie deutlich weniger theoretische Böden, nämlich weniger als 40, insbesondere zwischen 15 und 30. Wie eine Rohargonsäule ist der Sumpfbereich einer Argonausschleussäule mit einer Zwischenstelle der Niederdrucksäule verbunden und die Argonausschleussäule wird durch einen Kopfkondensator gekühlt, auf dessen Verdampfungsseite entspannte Sumpfflüssigkeit aus der Hochdrucksäule eingeleitet wird; eine Argonausschleussäule weist keinen Sumpfverdampfer auf.

Ein besonders effizienter Betrieb einer Luftzerlegungsanlage ergibt sich dann, wenn das Einblaseäquivalent bis ca. 25% beträgt (insbesondere bei den erläuterten Anlagen mit Argonausschleusung für eine Verbesserung der Sauerstoffausbeute und keiner bzw. relativ geringer Niederdruck-Stickstoff-Produktion (LPGAN). Bei bestimmten Luftzerlegungsanlagen, insbesondere für Großanlagen für beispielsweise die Kohlevergasung, werden wenig Flüssigprodukte hergestellt und/oder es wird verhältnismäßig wenig Stickstoff mit ca. 5 bar gefordert. Eine entsprechende Ausnutzung des Einblaseäquivalents ist unter diesen Umständen aber auf konventionelle Art schwierig, da neben relativ geringer Produktion an Stickstoff-Produkt auch der Kältebedarf im Prozess relativ niedrig ist (es entsteht praktisch ein Überschuss an Kälte, der dabei sinngemäß mit relativ hohen Austauschverlusten in Wärmetauschern wegen einer Reduktion von Wärmetauscher-Volumen verbraucht wird) und das Potenzial des Doppelsäulen-Prozesses nicht ausgeschöpft wird.

Eine entsprechende Ausnutzung wäre bei den erwähnten Anlagen, bei denen wenig bis kein flüssiges Produkt entnommen wird, schwierig, da bei relativ geringer Produktion an Stickstoff-Produkt auch der Kältebedarf im Prozess relativ niedrig ist. Dort entsteht ein Überschuss an Kälte, der mit relativ hohen Austauschverlusten in Wärmetauschern verbraucht wird. Das Potenzial von Doppelsäulen-Prozessen mit Luft-Einblase - bzw. DGAN-Turbine (Turbine für gasförmigen Druckstickstoff) wird damit nicht ausgeschöpft. Mit Bereitstellung von Stickstoff-Produkt mit einer Temperatur die deutlich geringer als Umgebungstemperatur wird zwar keine Energie bei der Luftzerlegungsanlage gespart, der Kälte-Überschuss wird aber an die Rectisol-Wäsche-Einheit (RWU) weitergegeben und nicht uneffizient verbraucht. Gerade hierin liegt ein wichtiger Vorteil des erfindungsgemäßen Verfahrens.

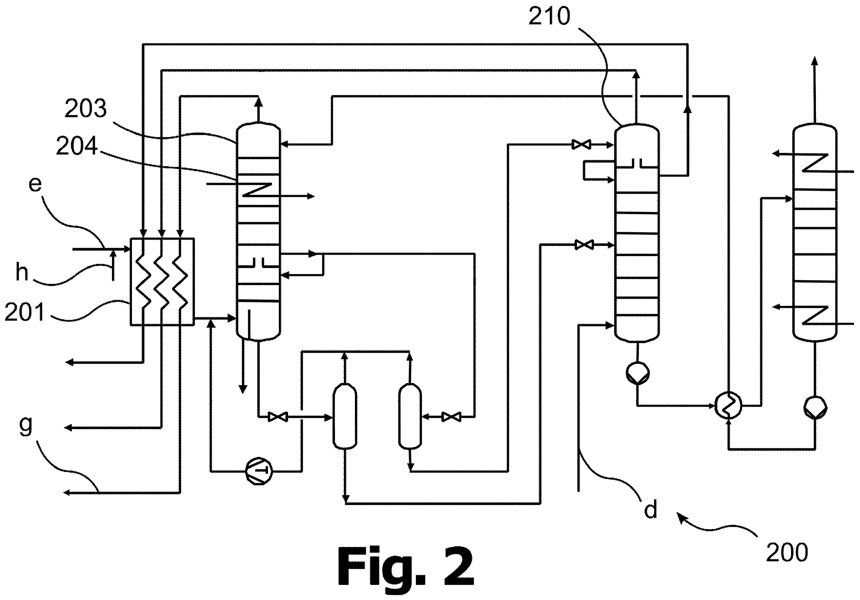

Daneben kann auf diese Weise eine deutliche Energieeinsparung in der Gas-Wäsche-Anlage erreicht werden. Wie auch unten unter Bezugnahme auf Figur 2 erläutert, wird beispielsweise ein Absorber einer entsprechenden Gas-Wäsche-Einheit gekühlt, um eine verbesserte Absorption durch das verwendete Absorptionsmittel (beim Rectisol-Verfahren Methanol) zu bewirken. Auch an anderer Stelle kann eine zusätzliche Kühlung erfolgen, beispielsweise um dem zu reinigenden Gas Wärme zu entziehen. Indem nun jedoch der Stickstoff bereits gekühlt zur Gas-Wäsche-Einheit zugeführt wird, wird die in der Gas-Wäsche-Einheit benötigte Kühlleistung deutlich reduziert. Mit der Erfindung wird also überschüssige Energie aus der Luftzerlegungsanlage zur Energieeinsparung bei der Gas-Wäsche-Einheit verwendet.

Das Stickstoff-Produkt wird nicht nur unter Druck, sondern auch tiefkalt bereitgestellt, daher ist der darin erhaltende Exergiewert deutlich höher. Eine direkte arbeitsleistende Entspannung von diesem Strom würde zu einer weiteren (deutlichen) Temperaturabsenkung führen. Da die Kälte in Rectisol-Wäsche-Einheit (RWU) aber auf einem tieferen Temperatur-Niveau (tiefer als ca. -70°C) nicht benötigt wird, kann die zusätzliche Arbeitsenergie in Form von elektrischen Strom gewonnen werden bzw. teilweise wegen einer Vorkühlung auf höheres Temperatur-Niveau übertragen werden. Eine mögliche Verschaltung dazu sieht vor, dass der Stickstoff zwischen der Luftzerlegungsanlage und der Strippkolonne mittels eines Wärmetauschers erwärmt (im Wärmetauscher können dann andere Gasströme wie ein Feed-Gasstrom gekühlt werden, wodurch Fremdkälte eingespart wird) und anschließend mittels einer Expansionsturbine gekühlt und zugleich entspannt wird. Die weitere Abkühlung nach der Entspannung findet dabei durch den Wärmetauscher unter Ausnutzung des gekühlten Stickstoffs aus der Luftzerlegungsanlage statt. Eine solche Expansionsturbine weist dabei gleichzeitig mehrere Vorteile auf, die genutzt werden können. Neben der Abkühlung wird der (zuvor erwärmte) Stickstoff zusätzlich entspannt, d.h. der Druck des Stickstoffs wird reduziert. Wie eingangs erwähnt, ist dies bei der Reinigung von Gas in der Regel ohnehin nötig. Während bei der Verwendung von Ventilen zur Druckminderung, die im Stickstoff enthaltene Energie nutzlos verloren geht, bietet die Expansionsturbine die Möglichkeit, die Energie, die der Stickstoff durch die Entspannung abgibt, in Form von Arbeitsleistung rückzugewinnen. Mit dem Wärmetauscher kann zudem auch anderes Gas abgekühlt bzw. zur Erwärmung des Stickstoffs genutzt werden.

Mit dem beschriebenen Vorgehen kann dann unter Erwärmung des Stickstoffs auf etwa Umgebungstemperatur vor der arbeitleistenden Entspannung die überschüssige Kälteleistung aus der Luftzerlegungsanlage zum einen in elektrische Energie (oder allgemein Arbeitsleistung) gewandelt werden und zum anderen wegen einer Vorkühlung (von einem weiteren Prozessstrom) auf einem etwas höheren Temperatur-Niveau benutzt werden. Die direkt an der Expansionsturbine gewonnene Energie kann vorzugsweise in ein Energiesystem wie ein Stromnetz, an das die Gas-Wäsche-Einheit angebunden ist, zurückgespeist werden. Es ist jedoch auch zweckmäßig, diese Energie zusätzlich oder alternativ zum Antrieb wenigstens eines Gerätes wie Pumpen, Verdichter oder Booster zu verwenden, beispielsweise auch in der Gas-Wäsche-Einheit selbst.

Bei Verwendung der Expansionsturbine ist es zweckmäßig, wenn der Stickstoff auf einen Druck zwischen 2,1 bar und 2,6 bar, oder, wenn eine Verwendung des Stickstoffs für eine Adsorptionsanlage vorgesehen ist, zwischen 2,6 bar und 3,6 bar entspannt wird. Bei diesen Druckbereichen handelt es sich - wie erwähnt - um solche Bereiche, die der Stickstoff bei der Verwendung als Strippgas haben sollte, damit er möglichst effizient in der Gas-Wäsche-Einheit verwendet werden kann. Wenn also der Stickstoff bereits durch die Expansionsturbine entsprechend entspannt wird, ist keine weitere Druckreduzierung mittels eines Ventils oder Ähnlichem nötig, bei dem frei werdende Energie des Stickstoffs ungenutzt verloren ginge.

Besonders zweckmäßig ist das vorgeschlagene Verfahren auch bei Luftzerlegungslangen, bei denen der Stickstoff in mehreren Strängen bereitgestellt wird. Diese können dann vereint werden, bevor der Stickstoff der Expansionsturbine zugeführt wird. Die Energie aus überschüssiger Kälte eines jeden Strangs kann anschließend in nur einer Expansionsturbine in Form von Arbeitsleistung zurückgewonnen werden. Im Vergleich dazu würde für eine Ausnutzung der überschüssigen Kälteleistung direkt in der Lufterzerlegungsanlage beispielsweise mittels Kälteverdichtern pro Strang jeweils eine eigene Turbine oder ein zusätzliches Antriebsystem benötigt.

Ein Aufbau einer entsprechenden Anlage mit einer Luftzerlegungsanlage und einer Gas-Wäsche-Einheit sieht dann so aus, dass der Stickstoff, der von der Luftzerlegungsanlage bereitgestellt wird der Strippkolonne der Gas-Wäsche-Einheit zugeführt wird. Bei Verwendung des Wärmetauschers und der Expansionsturbine muss der Stickstoff nach der Luftzerlegungsanlage den Wärmetauscher und dann die Expansionsturbine durchlaufen und anschließend der Strippkolonne zugeführt werden.

Die Erfindung wird nachfolgend unter Bezugnahme auf die beigefügte Zeichnung näher erläutert, welche verschiedene Anlagenteile zeigt, anhand derer die erfindungsgemäßen Maßnahmen erläutert werden.

Kurze Beschreibung der Zeichnung

Figur 1    zeigt eine Luftzerlegungsanlage in Form eines schematischen Prozessflussdiagramms.

Figur 2    zeigt eine Rectisol-Wäsche in Form eines schematischen Prozessflussdiagramms.

Figur 3    zeigt eine Anlage gemäß einer Ausführungsform der Erfindung in schematischer Darstellung.

Figur 4    zeigt eine Anlage gemäß einer weiteren Ausführungsform der Erfindung in schematischer Darstellung.

Ausführliche Beschreibung der Zeichnung

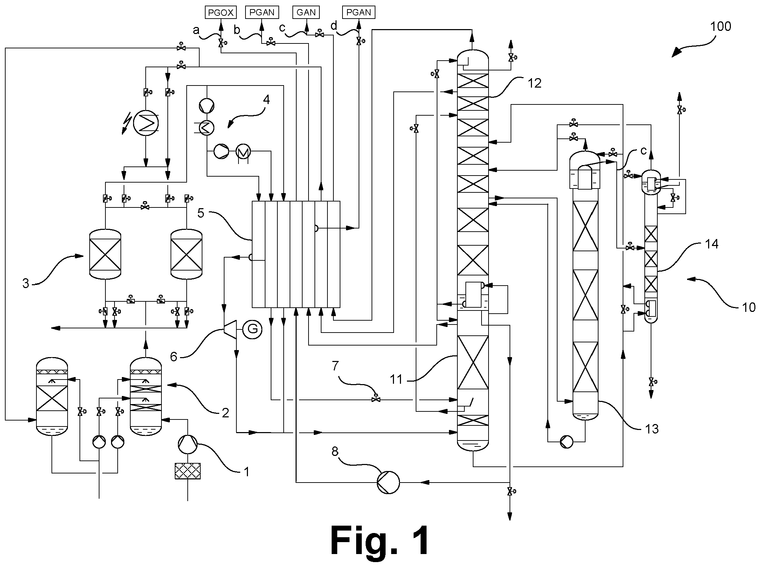

In Figur 1 ist eine Luftzerlegungsanlage an sich bekannter Art schematisch und vereinfacht dargestellt, mit der Stickstoff für eine Gas-Wäsche-Einheit gemäß einer Ausführungsform der Erfindung bereitgestellt werden kann. Der Luftzerlegungsprozess (der Kälteerzeugungs- bzw. der Rektifikationsteil) kann dabei je nach Produkt- und Konzeptanforderungen abweichend von der Darstellung in Figur 1 ausgeführt werden.

Insbesondere kann in Abweichung zu Figur 1, eine Luftzerlegungsanlage vorgesehen sein, in der Einsatzluft zum Teil in die Niederdrucksäule eingeblasen wird, und die mit einem hohen Einblaseäquivalent betrieben wird. Der Begriff des "Einblaseäquivalents" wurde bereits oben erläutert. In Abweichung zur Darstellung in Figur 1 kann dabei auch eine reine Argonausschleussäule verwendet werden. Es ist auch möglich, auf die Niederdrucksäule "unreinen" Stickstoff aus der Hochdrucksäule als Rücklauf aufzugeben. Wie erwähnt, wird dadurch die Sauerstoffausbeute trotz des erhöhten Einblaseäquivalents aufrechterhalten.

Luftzerlegungsanlagen der gezeigten Art sind vielfach an anderer Stelle beschrieben, beispielsweise bei H.-W. Häring (Hrsg.), Industrial Gases Processing, Wiley-VCH, 2006, insbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage zum Einsatz der vorliegenden Erfindung kann auf unterschiedlichste Weise ausgebildet sein.

Die in Figur 1 gezeigte Luftzerlegungsanlage 100 verfügt unter anderem über einen Hauptluftverdichter 1, eine Vorkühleinrichtung 2, ein Reinigungssystem 3, eine Nachverdichteranordnung 4, einen Hauptwärmetauscher 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

Aus dem Hauptwärmetauscher 5 führen neben einem Strom a mit Sauerstoff mit hohem Druck (PGOX) auch ein Strom b mit Stickstoff mit hohem Druck (PGAN aus der Hochdrucksäule 11 sowie ein Strom c mit Stickstoff mit niedrigem Druck (GAN) aus der Niederdrucksäule 12. Der Druck des Stroms b liegt dabei in etwa bei 5 bar und kann anschließend einer Expansionsturbine und dann einer Gas-Wäsche-Einheit (bzw. Rectisol-Wäsche) zugeführt werden, wie nachfolgend noch erläutert werden soll. Weiterhin ist nun ein weiterer Strom für Stickstoff mit hohem Druck (PGAN), hier Strom d, gezeigt, der von der Luftzerlegungsanlage bereitgestellt wird. Im vorliegenden Fall wird der Strom d vom Strom b abgezweigt und im Hauptwärmetauscher 5, durch den der Strom b geführt wird, dort insbesondere im oberen Bereich und damit nach teilweiser Erwärmung.

Denkbar ist auch, wenngleich energetisch weniger vorteilhaft, dass der Strom d bereits vor dem Hauptwärmetauscher 5 abgezweigt wird, dann als kalter Bypass. Der Stickstoff im Strom b wird damit nicht erwärmt, d.h. es wird weniger Kühlleistung verbraucht als wenn der Stickstoff im Strom d ebenfalls erwärmt würde bzw. nicht abgezweigt würde. In beidem Fällen ist die Temperatur im Strom d bei der Bereitstellung geringer als diejenige im Strom b. Die Abgabetemperatur vom Stickstoff-Strom zur Rectisol-Wäsche (RWU) kann dabei eine Optimierungsaufgabe darstellen.

In Figur 2 ist eine Rectisol-Wäsche an sich bekannter Art dargestellt, mit der mittels eines Waschmediums, beispielsweise Methanol, ein Gas gemäß einer Ausführungsform der Erfindung gereinigt werden kann.

Die Rectisol-Wäsche 200 umfasst einen Wärmetauscher 201, über den ein Gas mit dem Strom e mit Waschmedium (Strom h) einer einem Absorber 203 mit einer Kühleinheit 204 zugeführt wird. Gereinigtes Gas (Strom g) verlässt die Rectisol-Wäsche über den Wärmetauscher 201 (beispielsweise zur Verwendung als Synthesegas) wieder.

In der Rectisol-Wäsche ist nun weiterhin eine Strippeinheit bzw. Strippkolonne 210 vorgesehen, der Stickstoff (Strom d) als Strippgas zugeführt wird. Dort werden nun Kohlenstoffdioxid und Schwefelkomponenten ($H_2S$ und COS) aus dem Methanol (das ebenfalls in die Strippkolonne geführt wird) i ausgetrieben, wobei die Schwefelkomponenten größtenteils im oberen Kolonnenabschnitt wieder zurückgewaschen werden. Das Gas (zum größten Teil $CO_2$ und $N_2$) wird dann über den Wärmetauscher 201 angewärmt und aus der Rectisol-Wäsche geführt.

Beim Betreib der Rectisol-Wäsche 200 auf herkömmliche Weise, d.h. wenn der Stickstoff mit Umgebungstemperatur zugeführt wird, ist Kühlleistung in der Rectisol-Wäsche, insbesondere der Kühleinheit 204, nötig. Es versteht sich, dass auch anderen Stellen im Prozessablauf bzw. in der Anlage eine Kühlung nötig sein kann. Im Rahmen der Erfindung wird nun jedoch der Stickstoff, der als Strom d der Strippkolonne 210 zugeführt wird, bereits von der Luftzerlegungsanlage gekühlt, wie eingangs näher erläutert, bereitgestellt.

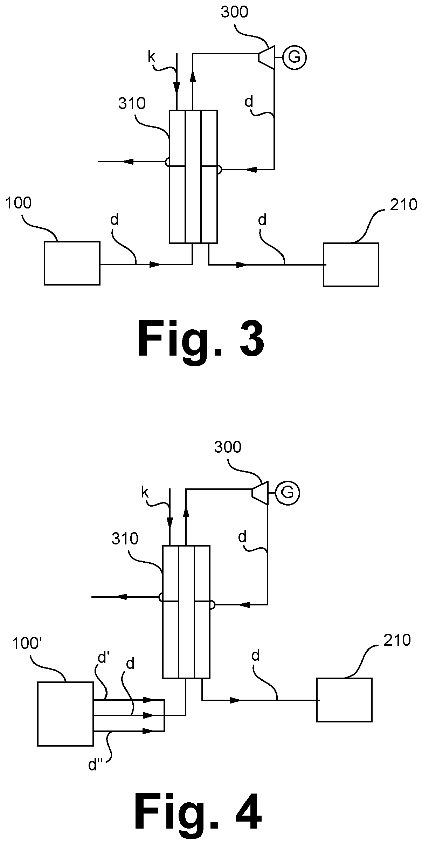

In Figur 3 sind hierzu sowohl die Luftzerlegungsanlage 100 als auch die Strippkolonne 210 der Rectisol-Wäsche gezeigt. Der Stickstoff, der von der Luftzerlegungsanlage 100 bereitgestellt wird (Strom d), wird zunächst einem Wärmetauscher 310 zugeführt.

Im Wärmetauscher 310 kann der kalte Stickstoff beispielsweise auf Umgebungstemperatur erwärmt werden. Hierzu kann auch ein weiteres Gas (Strom k) teilweise durch den Wärmetauscher geführt werden, welches dabei beispielsweise von Umgebungstemperatur ausgehend abgekühlt wird. Bei diesem weiteren Gas kann es sich insbesondere auch um das Gas (Strom e), welches mittels der Gas-Wäsche-Einheit gereinigt werden soll, handeln.

Weiterhin wird der Stickstoff dann einer Expansionsturbine 300 zugeführt, in welcher der Stickstoff nun entspannt und zugleich abgekühlt wird. Dabei können die Expansionsturbine bzw. deren Betrieb derart ausgestaltet werden, dass eine gewünschte Druckminderung und gleichzeitig eine gewünschte Kühlung erreicht wird. Beispielsweise kann der Stickstoff von ca. 5 bar, wie er von der Luftzerlegungsanlage bereitgestellt wird, auf ca. 2,1 bar, wie er für die Strippkolonne benötigt wird, entspannt werden. Die Abkühlung kann dabei beispielsweise von Umgebungstemperatur auf ca. -30°C erfolgen.

Die durch die Entspannung und Abkühlung aus dem Stickstoff entnommene Energie kann nun beispielsweise über einen Generator G als elektrische Energie (oder allgemein als Arbeitsleistung) zurückgewonnen werden. Diese Energie kann dann beispielsweise für den Betrieb von Pumpen bzw. anderen Geräten in der Rectisol-Wäsche verwendet werden.

Nach Verlassen der Expansionsturbine 300 kann der - nunmehr entspannte und abgekühlte - Stickstoff zur weiteren Abkühlung erneut durch den Wärmetauscher 310 geleitet werden, bevor er der Strippkolonne 210 zugeführt wird. Zweckmäßig ist dabei eine Temperatur, die für den Stickstoff in der Strippkolonne ohnehin gewünscht ist. Durch den gekühlten Stickstoff wird in der Rectisol-Wäsche nun eine deutlich geringere Kühlleistung benötigt.

In Figur 4 ist eine weitere Luftzerlegungsanlage 100' mit der Strippkolonne 210 der Rectisol-Wäsche-Einheit gezeigt. Diese Ausführungsform entspricht im Grunde derjenigen gemäß Figur 3, jedoch mit dem Unterschied, dass die Luftzerlegungsanlage 100' drei Stränge für Stickstoff, hier die Ströme d, d' und d", bereitstellt. Diese drei Stränge bzw. Ströme werden nun vereint, bevor sie als ein Strom in den Wärmetauscher 310 geführt werden.

Dies zeigt einen Vorteil der vorgeschlagenen Vorgehensweise, wonach der Stickstoff in der Luftzerlegungsanlage nicht erwärmt wird, sondern bei der Energie aus dem dann kalten Stickstoff erst später- und dann in nur einer Expansionsturbine -gewonnen wird.

### Patentansprüche

1. Verfahren zum Reinigen eines Gases (e), bei dem mittels einer Luftzerlegungsanlage (100, 100') Stickstoffstoff (d, d', d") bereitgestellt wird, der einer Gas-Wäsche-Einheit (200) zugeführt wird, in welcher mittels eines Waschmediums (h) unerwünschte Komponenten aus dem Gas (e) ausgewaschen werden,

   wobei die unerwünschten Komponenten aus dem Waschmedium (h) wenigstens teilweise unter Verwendung des zugeführten Stickstoffs (d) als Strippgas in einer Strippeinheit (210) der Gas-Wäsche-Einheit (200) ausgetrieben werden,
   **dadurch gekennzeichnet, dass** der Stickstoff (d, d', d") von der Luftzerlegungsanlage (100) mit einer Temperatur unter Umgebungstemperatur bereitgestellt wird.

2. Verfahren nach Anspruch 1, wobei der Stickstoff (d, d', d") von der Luftzerlegungsanlage (100, 100') mit 0 bis -100°C bereitgestellt wird.

3. Verfahren nach Anspruch 1 oder 2, wobei der Stickstoff (d, d', d") zwischen der Luftzerlegungsanlage (100, 100') und der Strippkolonne (210) mittels eines Wärmetauschers (310) erwärmt und anschließend mittels einer Expansionsturbine (300) gekühlt und zugleich entspannt wird.

4. Verfahren nach Anspruch 3, wobei mittels des Wärmetauschers (310) weitere Gasströme gekühlt werden.

5. Verfahren nach Anspruch 3 oder 4, wobei durch die Expansionsturbine (300) aus dem Stickstoff (d) gewonnene Energie in ein Energiesystem zurückgespeist und/oder zum Antrieb wenigstens eines Gerätes verwendet wird.

6. Verfahren nach einem der Ansprüche 3 bis 5, wobei der Stickstoff (d) auf einen Druck zwischen 2,1 bar und 2,6 bar, oder, wenn eine Verwendung des Stickstoffs für eine Adsoptionsanlage vorgesehen ist, zwischen 2,6 bar und 3,6 bar entspannt wird.

7. Verfahren nach einem der Ansprüche 3 bis 6, wobei der durch die Expansionsturbine (300) gekühlte Stickstoff (d) mittels des Wärmetauschers (310) weiter gekühlt wird.

**8.** Verfahren nach einem der Ansprüche 3 bis 7, wobei der Stickstoff (d, d', d") in der Luftzerlegungsanlage (100') in mehreren Strängen bereitgestellt wird, die vereint werden, bevor der Stickstoff der Expansionsturbine (300) zugeführt wird.

**9.** Anlage zum Reinigen eines Gases mit einer Luftzerlegungsanlage (100, 100'), die dazu eingerichtet ist, Stickstoff (d, d', d") bereitzustellen, und

> einer Gas-Wäsche-Einheit (200), die dazu eingerichtet ist, mittels eines Waschmediums (h) unerwünschte Komponenten aus dem Gas auzuwaschen (e), und
> die unerwünschten Komponenten aus dem Waschmedium (h) wenigstens teilweise unter Verwendung des von der Luftzerlegungsanlage (100, 100') bereitgestellten (d, d', d") Stickstoffs als Strippgas in einer Strippeinheit (210) auszutreiben,
> **dadurch gekennzeichnet, dass** die Luftzerlegungsanlage (100, 100') dazu eingerichtet ist, den Stickstoff (d, d', d") mit einer Temperatur unter Umgebungstemperatur bereitzustellen.

**10.** Anlage nach Anspruch 9, weiterhin mit einem Wärmetauscher (310) und einer Expansionsturbine (300), die derart angeordnet sind, dass der Stickstoff (d, d', d") nach der Luftzerlegungsanlage (100, 100') den Wärmetauscher (310) und dann die Expansionsturbine (300) durchläuft und anschließend der Strippeinheit (210) zugeführt wird.

Fig. 1

**Fig. 2**

EP 3 318 314 A1

Fig. 3

Fig. 4

Europäisches
Patentamt

European
Patent Office

Office européen
des brevets

**EUROPÄISCHER RECHERCHENBERICHT**

Nummer der Anmeldung

EP 16 02 0494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 15 44 080 A1 (METALLGESELLSCHAFT AG) 31. Juli 1969 (1969-07-31) * Seite 12, Zeilen 14-19; Abbildung 1 * * Seite 14, Absatz 2 * * Seite 14, Zeilen 11-15 * ----- | 1,2 | INV. B01D53/14 |
| X | GB 2 150 855 A (HUMPHREYS & GLASGOW LTD) 10. Juli 1985 (1985-07-10) * Seite 1, Zeilen 56-76; Abbildung 2 * * Seite 1, Zeilen 111-122 * ----- | 1,2 | |
| X | AT 295 554 B (METALLGESSELLSCHAFT AG [DE]) 10. Januar 1972 (1972-01-10) * Seite 3, Zeilen 34-37, 49-53; Abbildung 1 * * Seite 4, Zeilen 18-20 * ----- | 1,2 | |
| X | DE 21 04 384 A1 (METALLGESELLSCHAFT AG) 24. August 1972 (1972-08-24) * Seite 8, letzter Absatz - Seite 9, Absatz 2; Abbildung * ----- | 1,2 | |
| A | EP 1 078 676 A2 (PRAXAIR TECHNOLOGY INC [US]) 28. Februar 2001 (2001-02-28) * Absatz [0028]; Abbildungen * ----- | 1-10 | RECHERCHIERTE SACHGEBIETE (IPC) B01D |
| A | US 4 957 515 A (HEGARTY WILLIAM P [US]) 18. September 1990 (1990-09-18) * Spalte 4, Zeilen 48-53; Abbildung 1 * ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 20. Juni 2017 | Gruber, Marco |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 02 0494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2017

| Im Recherchenbericht angeführtes Patentdokument | | Datum der Veröffentlichung | Mitglied(er) der Patentfamilie | | Datum der Veröffentlichung |
|---|---|---|---|---|---|
| DE 1544080 | A1 | 31-07-1969 | DE | 1544080 A1 | 31-07-1969 |
| | | | FR | 1501225 A | 10-11-1967 |
| | | | GB | 1160374 A | 06-08-1969 |
| | | | JP | S5127629 B1 | 13-08-1976 |
| | | | NL | 6616005 A | 16-05-1967 |
| | | | US | 3453835 A | 08-07-1969 |
| GB 2150855 | A | 10-07-1985 | KEINE | | |
| AT 295554 | B | 10-01-1972 | AT | 295554 B | 10-01-1972 |
| | | | DE | 1920001 A1 | 17-12-1970 |
| | | | FR | 2045420 A5 | 26-02-1971 |
| | | | GB | 1270756 A | 12-04-1972 |
| | | | RO | 56011 A | 01-02-1974 |
| DE 2104384 | A1 | 24-08-1972 | KEINE | | |
| EP 1078676 | A2 | 28-02-2001 | BR | 0003582 A | 03-04-2001 |
| | | | CA | 2316136 A1 | 17-02-2001 |
| | | | DE | 60003123 D1 | 10-07-2003 |
| | | | DE | 60003123 T2 | 13-05-2004 |
| | | | EP | 1078676 A2 | 28-02-2001 |
| | | | KR | 20010070022 A | 25-07-2001 |
| | | | US | 6174348 B1 | 16-01-2001 |
| US 4957515 | A | 18-09-1990 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Industrial Gases Processing. Cryogenic Rectification. Wiley-VCH, 2006